Europäisches Patentamt

European Patent Office

Office européen des brevets

(11) Veröffentlichungsnummer : **0 105 113 B1**

# (12) EUROPÄISCHE PATENTSCHRIFT

(45) Veröffentlichungstag der Patentschrift :
19.07.89

(21) Anmeldenummer : 83107425.7

(22) Anmeldetag : 28.07.83

(51) Int. Cl.⁴ : **B 01 D 53/36**, B 01 J 23/68, F 01 N 3/10

(54) **Verfahren zur Herabsetzung der Zündtemperatur von aus dem Abgas von Dieselmotoren herausgefiltertem Dieselruss.**

(30) Priorität : 03.09.82 DE 3232729

(43) Veröffentlichungstag der Anmeldung :
11.04.84 Patentblatt 84/15

(45) Bekanntmachung des Hinweises auf die Patenterteilung : 19.07.89 Patentblatt 89/29

(84) Benannte Vertragsstaaten :
AT BE DE FR GB IT SE

(56) Entgegenhaltungen :
EP-A- 0 077 524
DE-A- 3 238 129
GB-A- 1 068 186
GB-A- 1 438 557

(73) Patentinhaber : Degussa Aktiengesellschaft
Weissfrauenstrasse 9
D-6000 Frankfurt am Main 1 (DE)

(72) Erfinder : Domesle, Rainer, Dr.
Wingertstrasse 202
D-6457 Maintal (DE)
Erfinder : Koberstein, Edgar, Dr.
Wolfskernstrasse 8
D-8755 Alzenau (DE)
Erfinder : Pletka, Hans-Dieter, Dr.
Im Schwalbengrund 20
D-6464 Freigericht I (DE)
Erfinder : Völker, Herbert
Bogenstrasse 43
D-6450 Hanau 11 (DE)

**Beschreibung**

Die Erfindung betrifft ein Verfahren zur Herabsetzung der Zündtemperatur von aus dem Abgas von Dieselmotoren ausgefiltertem Dieselruß.

Dieselmotoren emittieren neben den auch von Ottomotoren ausgestoßenen Schadstoffen, wie Kohlenwasserstoffen, Stickoxiden und CO, bedingt durch ihre Betriebsweise, auch Rußteilchen bzw. feinste Kondensattröpfchen oder ein Konglomerat von beiden (« particulates »). Diese « particulates », im folgenden einfach als « Dieselruß » bezeichnet, sind besonders reich an kondensierten, polynuklearen Kohlenwasserstoffen, von denen einige als krebserregend erkannt worden sind.

Es ist schon vorgeschlagen worden, Ruß und Kondensatteilchen in Fallen oder Filtern einzufangen. Da aber die Temperaturen von Dieselabgasen unter normalen Betriebsbedingungen zum Abbrennen des angesammelten Rußes nicht ausreichen — dazu sind je nach motorbedingter Rußzusammensetzung mindestens 450-600° C nötig — muß für eine rechtzeitige Erhöhung das Abgastemperatur zur Regenerierung der Falle bzw. des Filters gesorgt werden, um ein Akkumulieren von Ruß und damit Verstopfung zu vermeiden. Dies kann u. a. so geschehen, daß das im Motor gebildete Luft/Kraftstoff-Gemisch periodisch angefettet wird und damit höhere Abgastemperaturen erzeugt werden. Eine andere Möglichkeit sieht die Anordnung eines Brenners im Abgassystem vor dem Filter vor, welcher bei Bedarf gezündet wird und für den Rußabbrand benötigte Temperatur sorgt.

Diese Lösungswege sind aber mit zusätzlichem Kraftstoffverbrauch verbunden und reduzieren damit teilweise einen wichtigen Vorteil des Dieselmotors.

Es wurde nun gefunden, daß sich die Zündtemperatur von Dieselruß durch eine Ausrüstung des Rußfilters bzw. der Rußfalle mit einem speziellen Katalysator oder mit einer diesen enthaltenden, temperaturbeständigen Substanz, herabsetzen und sich dadurch insbesondere eine wesentliche Verminderung des Kraftstoffverbrauches während der Regenerierungsphase eines Filters erreichen läßt.

Die vorliegende Erfindung betrifft eine Weiterentwicklung der in EP-B 00 77 524 (Priorität: 21.10.1981 ; Anmeldetag : 13.10.1982 ; Veröffentlichung : 15.01.1986) offenbarten Erfindung, welche ein Verfahren zur Herabsetzung der Zündtemperatur von aus dem Abgas von Dieselmotoren herausgefiltertem Dieselruß unter Verwendung von Silbervanadat als katalytisch aktiver Substanz betrifft.

Gegenstand der Erfindung ist dagegen ein Verfahren zur Herabsetzung der Zündtemperatur von aus dem Abgas von Dieselmotoren ausgefiltertem Dieselruß, wobei das Abgas über eine katalytische aktive Substanz aus

Lithiumoxid,
Kupfer (I)-chlorid,
Vanadinpentoxid mit 1-30 Gew.% Alkalimetalloxid
einem Vanadat, ausgenommen Silbervanadat, vorzugsweise des Lithiums, Natriums, Kaliums oder Cers oder
einem Perrhenat, vorzugsweise des Kaliums oder Silbers

oder aus einer Kombination zweier oder mehrerer dieser Substanzen geleitet wird.

Die katalytisch aktive Substanz kann auf einer temperaturbeständigen Trägersubstanz abgeschieden oder mit ihr vermischt sein. Als Trägermaterialien kommen übliche Stoffe, insbesondere Aluminiumoxid der Übergangsreihe in Frage ; andere Beispiele sind Siliciumdioxid, Titandioxid, Zirkonoxid und Oxide der Seltenen Erdmetalle, sowie Kupferchromoxid, Nickeloxid und Eisenoxide.

Es wird bevorzugt, daß die katalytisch aktive Substanz oder ihre Kombination mit einem Trägermaterial auf einem als struktureller Verstärker dienenden Filterelement aufgebracht ist.

Als struktureller Verstärker kann eine Packung aus temperaturbeständiger Metall- oder Mineralwolle oder ein Filterelement gemäß DE-OS 29 44 841 oder gemäß DE-OS 29 51 316 verwendet werden. Bevorzugt wird ein von zahlreichen Strömungskanälen durchzogener monolithischer Keramikkörper verwendet, dessen Kanalmündung in gegenüberliegenden Stirnflächen so mit Verschlußmitteln versehen sind, daß jeweils ein in einer Stirnfläche offener Kanal in der gegenüberliegenden Stirnfläche verschlossen ist.

Das Filterelement kann im Strömungsquerschnitt eines mit Zufluß- und Abströmkanal für das Abgas versehenen Gehäuses angeordnet sein.

Eine günstige Variante der Erfindung sieht vor, daß neben der aktiven Substanz eine Edelmetallimprägnierung vorliegt. Dabei wird bevorzugt, daß die aktive Substanz im Bereich der Filtereingangsseite und die Edelmetall-Imprägnierung daran anschließend im Bereich der Filterausgangsseite aufgebracht ist.

Für den praktischen Einsatz des die Zündtemperatur von Dieselruß erniedrigenden Katalysators wird die aktive Verbindung bzw. ihre Kombination mit einem Trägermaterial, gelöst bzw. als Washcoat, auf einem als struktureller Verstärker dienenden Filterelement aufgebracht.

Die im Einzelfall auf ein Trägermaterial bzw. Filterelement aufzubringende Menge an aktiver Substanz ist bezüglich der unteren Grenze weniger kritisch als hinsichtlich der oberen Grenze.

Es kann bereits genügen, wenn ein Träger oder ein mit Trägermaterial überzogener filternder struktureller Verstärker die aktive Substanz in einer Menge von 4 g/m² geometrischer Oberfläche enthält.

Die Obergrenze ist durch den maximal zulässigen Druckabfall über ein gegebenes Filtersystem beschränkt. Im Falle eines bekannten monolithischen Filterkörpers aus Cordierit mit 11,85 cm Durchmesser, 15,25 cm Länge und 15,5 Zellen/cm² können 10-100, vorzugsweise 20-60 g/m² aufgebracht werden.

Als struktureller Verstärker für den Katalysator bzw. ein diesen enthaltendes Stoffsystem kommen an sich bekannte Filtersysteme für Dieselabgase in Frage, bei denen Zufluß- und Abströmkanal für das Abgas so angeordnet sind, daß bei möglichst großer Filtrierleistung ein Minimum an Druckverlust hingenommen werden muß.

Als struktureller Verstärker kann eine Packung aus temperaturbeständiger Metall- oder Mineralwolle oder ein Filterelement gemäß DE-OS 29 44 841 oder gemäß DE-OS 29 51 316 verwendet werden. Besonders günstig aber hat sich die Verwendung eines von zahlreichen Strömungskanälen durchzogenen monolithischen Keramikkörpers erwiesen, dessen Kanalmündungen in gegenüberliegenden Stirnflächen so mit Verschlußmitteln versehen sind, daß jeweils ein in einer Stirnfläche offener Kanal in der gegenüberliegenden Stirnfläche verschlossen ist. Ein solches Filterelement hat also die Form eines üblichen monolithischen strukturellen Verstärkers für Katalysatoren und kann aus α-Aluminiumoxid oder Cordierit bestehen. Die Strömungskanäle weisen makroporöse Wandungen auf, welche als Filterflächen herangezogen werden. Um dies zu erreichen, wird jeweils ein an einer Stirnfläche offener Kanal auf der gegenüberliegenden Stirnfläche verschlossen. Der Verschluß erfolgt mit einem Keramikstopfen, welcher entweder mit dem Material des Monolithen versintert oder mittels eines feuerfesten Kittes verklebt ist. Das Abgas wird also durch Schikanen gezwungen, die makroporös ausgebildeten Kanalwände zu durchströmen, wobei der Dieselruß zurückgehalten wird.

Da der Dieselruß nicht nur aus Kohlenstoffpartikeln besteht, sondern zu ca. 20-30 % auch noch adsorbierte verflüchtigbare Kohlenwasserstoffe enthält, kann es von Vorteil sein, die beschriebenen katalytischen Dieselfilter zur Entfernung derselben zusätzlich mit Edelmetall zu imprägnieren. Besonders vorteilhaft hat sich erwiesen, die Abgaseintrittsseite des Filters mit dem erfindungsgemäßen Katalysator zu beschichten und die Abgasaustrittsseite des Filters mit einem Edelmetallkatalysator, bestehend aus mindestens einem Element der Platingruppenmetalle, gegebenenfalls in Verbindung mit einem katalysefördernden Metalloxid, wie $\gamma$-$Al_2O_3$, zu belegen. Dies hat den zusätzlichen Vorteil, daß das beim Abbrennen des Dieselrußes evtl. entstehende Kohlenmonoxid durch den Edelmetallkatalysator in unschädliches Kohlendioxid umgewandelt wird.

Die Erfindung wird nachfolgend anhand von Ausführungsbeispielen in Verbindung mit der Zeichnung näher erläutert.

In dieser zeigen

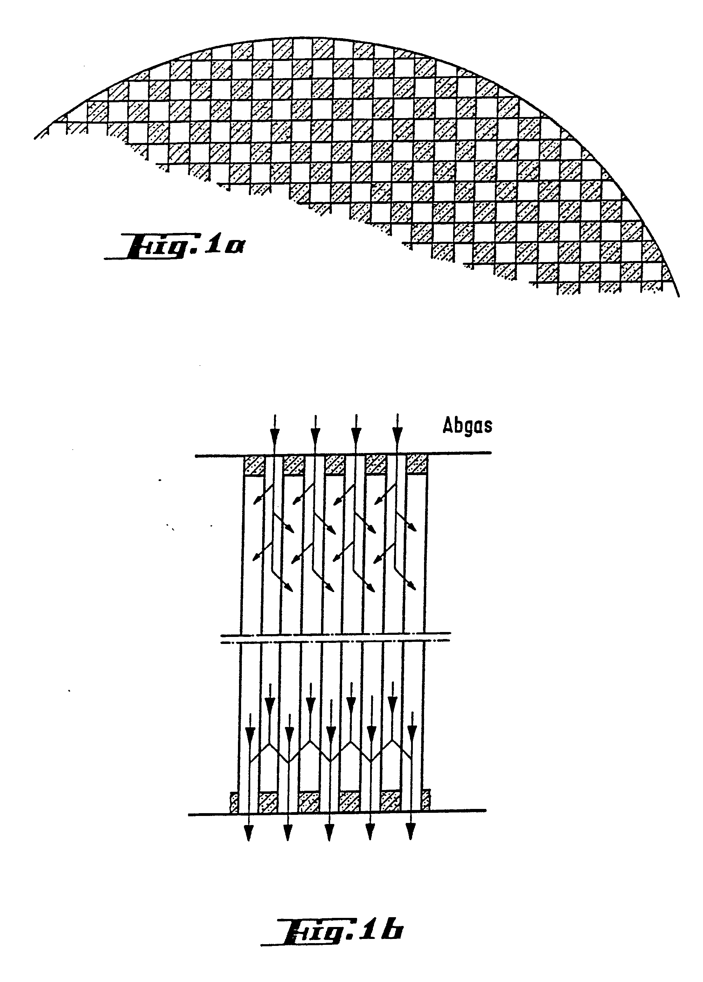

Figur 1 die Draufsicht (Fig. 1a) und den Schnitt (Fig. 1b) eines Dieselfilters in Form eines üblichen monolithischen strukturellen Verstärkers für Katalysatoren aus Cordierit mit porösen Wandungen der Strömungskanäle, bei dem auf der Anström- und Abströmseite Kanäle mit einem Keramikstopfen verschlossen sind. Diese Stopfen sind so verteilt, daß jeweils einem verschlossenen Kanalende ein offenes gegenüberliegt;

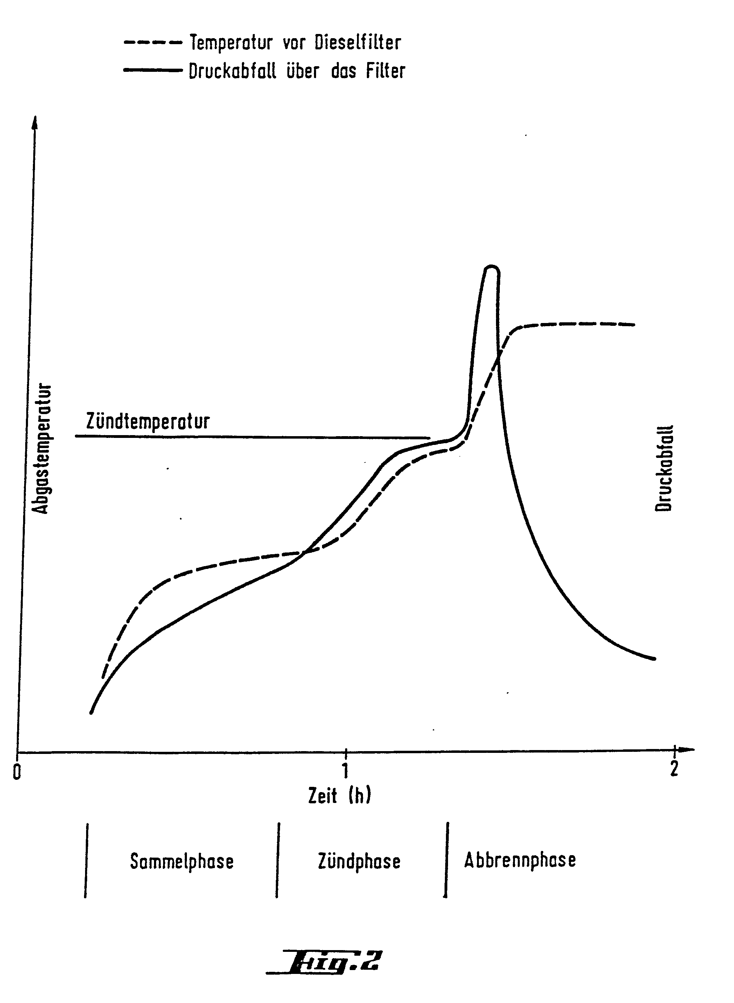

Figur 2 eine schematische Darstellung eines Regenerationszyklus eines erfindungsgemäß ausgerüsteten Filters mit Sammelphase, Zündphase und Abbrennphase sowie den dazugehörigen Temperatur- und Differenzdruckprofilen.

Auf der Abzisse sind modellhaft die Zeitabschnitte für jeweils eine Sammelphase, Zündphase und Abbrennphase ersichtlich. Der Ordinate ist der Temperatur- und Gegendruckverlauf (Druckdifferenz über dem Filter) zugeordnet. Der Druckabfall (ausgezogene Linie) steigt in der Sammelphase bei definierter Drehzahl und Last bis zu einem vorgegebenen Wert an. Dann wird die Last und damit die Abgastemperatur geregelt, bis der Druckabfall über das Filter in die Horizontale umbiegt. Hierbei stehen ausgefilterter und abgebrannter Ruß etwa im Gleichgewicht. Die dabei vor dem Filter gemessene Abgastemperatur wird als Zündtemperatur bezeichnet. Zur vollständigen Regeneration des Filters wird die Last weiter erhöht, bis ein steiler Abfall des Differenzdrucks über das Filter durch Abbrennen der Restrußbeladung auf etwa das Ausgangsniveau stattgefunden hat. Die Last wird hierauf auf « Normalbetrieb » zurückgenommen.

## Beispiel 1

In einem Becherglas werden 15,00 g Kaliumperrhenat ($KReO_4$) in 1 200 ml entionisiertem Wasser gelöst und die Lösung in 4 Teile geteilt. Ein kommerziell erhältlicher monolithischer Filterkörper aus Cordierit, wie in Figur 1 gezeigt, mit 11,85 cm Durchmesser, 15,25 cm Länge und 15,5 Zellen/cm² wird von den Stirnseiten her mit einem Teil der Lösung zur Imprägnierung übergossen und anschließend bei 200 °C getrocknet. Dieser Vorgang wird mit den restlichen 3 Lösungsteilen wiederholt.

## Beispiel 2

Es wird eine Lösung von 40 g Kaliumvanadat ($KVO_3$) in 500 ml entionisiertem Wasser bereitet. Mit dieser Lösung wird ein wie im Beispiel 1 verwendeter Filterkörper durch zweimaliges Übergießen von einer Stirnfläche her mit 2-stündiger Zwischentrocknung bei 250 °C imprägniert. Eine abschließende Trocknung über 2 Stunden ebenfalls bei 250 °C ergibt das fertige katalytische Filter.

### Beispiel 3

100 g Kupfer(I)-chlorid (Merck Nr. 2738) werden mit 140 ml entionisiertem Wasser 24 Stunden lang in einer Kugelmühle gerollt. Danach wird auf 560 ml mit entionisiertem Wasser aufgefüllt und mit der Hälfte dieses Volumens (280 ml) ein wie in Beispiel 1 verwendetes Filter von einer Stirnfläche her übergossen und anschließend 4 Stunden im Trockenschrank bei 100 °C getrocknet. Die Kupferchloridaufnahme beträgt 50 g.

### Beispiel 4

Ein Dieselfilter wie in Beispiel 1 verwendet, wird von der einen Stirnfläche her mit 45 g γ-Aluminiumoxid aus einer 10 %igen γ-Aluminiumoxiddispersion, welche die Edelmetalle Platin und Palladium im Gewichtsverhältnis 2 : 1 in Form von $H_2PtCl_6$ und $PdCl_2$ enthält, beschichtet. Mit den 45 g Aluminiumoxid werden vom Filter insgesamt 2,58 g Platin und 1,29 g Palladium aufgenommen. Nach anschließender Trocknung bei 250 °C über Nacht und thermischer Zersetzung der Edelmetallverbindungen bei 600 °C über 2 Stunden im Muffelofen werden diese noch 2 Stunden lang bei 550 °C im Wasserstoffstrom reduziert. Nach dem Abkühlen wird die andere, noch nicht gecoatete Seite des Filters wie in Beispiel 2 imprägniert und als Abgaseingangsseite bezeichnet.

### Beispiel 5

50 g Kupferchromoxid-γ-Aluminiumoxid-Mischung (75 Gewichtsteile : 25 Gewichtsteilen), 4 g NiO (Merck Nr. 6723), 10 g $TiO_2$ (P 25 der Degussa) und 50 g $V_2O_5$ (Merck Nr. 824), letzteres dotiert mit 3 % $K_2O$ (vermischen mit KOH, trocknen und tempern), werden mit 4,5 ml konzentrierter Salpetersäure und 400 ml entionisiertem Wasser 24 Stunden in einer Kugelmühle gerollt. Anschließend wird das Mahlgut mit entionisiertem Wasser auf 1 l Gesamtvolumen verdünnt und ein wie in Beispiel 1 verwendetes Dieselfilter mit 400 ml dieser Mischung von einer Seite her übergossen. Danach erfolgt eine 3-stündige Trocknung bei 300 °C. Die Feststoffaufnahme beträgt insgesamt 45,6 g. Die beschichtete Seite wird als Abgaseingangsseite bezeichnet.

### Beispiel 6

In einer Lösung von 1,2 g $Cu(NO_3)_2 \cdot 3H_2O$ (Merck Nr. 2751) in 100 ml entionisiertem Wasser werden 50 g $TiO_2$ (P 25 der Degussa) eingerührt und die Mischung 2 Stunden bei 300 °C im Trockenschrank getrocknet. Dem getrockneten Produkt werden 25 g entnommen und mit 25 g $V_2O_5$ (Merck Nr. 824) und 200 ml entionisiertem Wasser, enthaltend 0,45 g KOH, 24 Stunden in einer Kugelmühle gerollt. Anschließend wird auf 280 ml mit $H_2O$ verdünnt und damit ein wie in Beispiel 1 verwendetes Dieselfilter von einer Stirnfläche her übergossen. Nach einer 2-stündigen Trocknung bei 300 °C im Trockenschrank wird die beschichtete Seite des Filters als Abgaseingangsseite bezeichnet.

### Beispiel 7

Ein Dieselfilter, wie in Beispiel 1 verwendet, wird wie in Beispiel 4 beschrieben, von der einen Seite mit der Hälfte des Edelmetall enthaltenden Washcoats und von der anderen Seite (wie im Beispiel 2) mit 40 g $V_2O_5$, dotiert mit 5 Gew.% $K_2O$, beschichtet. Die damit gecoatete Seite wird als Abgaseingangsseite bezeichnet.

### Beispiel 8 : Vergleichsbeispiel

Ein Dieselfilter, wie das in Beispiel 1 verwendete, wird wie im Beispiel 4 nur mit γ-Aluminiumoxid und Edelmetallen (Platin/Palladium) beschichtet und anschließend derselben Aktivierung wie in Beispiel 4 unterworfen.

### Beispiel 9

100 g $(NH_4)_2Ce(NO_3)_6$ (Rhone-Poulence) werden in 4 l entionisiertem Wasser und 200 ml konzentrierter Salpetersäure gelöst. Dazu werden 28 g $NaVO_3 \cdot H_2O$ (Riedel de Haen Nr. 14203), gelöst in 500 ml heißem Wasser, gegeben und die Reaktionsmischung auf 80-100 °C aufgeheizt. Das ausgefallene Ce(IV)-Vanadat $(2CeO_2 \cdot V_2O_5 \cdot nH_2O)$ wird durch mehrmaliges Dekantieren mit warmem Wasser nitratfrei gewaschen und anschließend mit 400 ml Wasser über Nacht in einer Kugelmühle gerollt. Das Mahlgut wird mit Wasser auf 550 ml aufgefüllt und damit ein wie in Beispiel 1 verwendetes Dieselfilter von einer Seite her übergossen und überschüssige Suspension ausgeblasen. Nach Trocknung über 3 Stunden bei 300 °C wird der Vorgang mit derselben Filterseite wiederholt. Die Aufnahme an Cer(IV)-vanadat beträgt 30 g.

## Beispiel 10

150 g LiOH (Merck Nr. 5691) werden in 3,5 l entionisiertem Wasser gelöst. Ein Dieselfilter, wie im Beispiel 1 verwendet, wird mit der Lösung übergossen und zur Entfernung von überschüssigem Beschichtungsmaterial mit Luft ausgeblasen. Nach 3-stündigem Trocknen bei 200 °C beträgt die Feststoffaufnahme 21 g.

## Beispiel 11 : Vergleichsbeispiel

400 g CuO (Merck Nr. 2761) werden in 1 200 ml entionisiertem Wasser und 31 ml konzentrierter Salpetersäure eingerührt und 24 Stunden in einer Kugelmühle gerollt.

Ein wie in Beispiel 1 verwendetes Dieselfilter wird mit der Suspension übergossen und zur Entfernung von überschüssigem Beschichtungsmaterial mit Luft ausgeblasen. Nach 1-stündigem Trocknen bei 450 °C beträgt die Feststoffaufnahme 68 g.

## Beispiel 12 : Vergleichsbeispiel

500 g Kupferchromoxid, 40 g NiO (Merck Nr. 6723) und 100 g $TiO_2$ (P 25 der Degussa) werden in 1 500 ml entionisiertem Wasser und 45 ml konzentrierter Salpetersäure eingerührt und anschließend 24 Stunden in einer Kugelmühle gemahlen. Mit der erhaltenen Suspension wird ein wie im Beispiel 1 verwendetes Filter beidseitig übergossen und zur Entfernung von überschüssigem Beschichtungsmaterial mit Luft ausgeblasen. Nach 1-stündigem Trocknen bei 450 °C beträgt die Feststoffaufnahme 73 g.

## Beispiel 13

40 g Vanadinpentoxid (Merck Nr. 824) werden in einem Becherglas in 600 ml entionisiertem Wasser aufgeschlämmt und 15 min. mit einem Turrax®-Rührer gerührt. Mit der so erhaltenen Suspension wird ein Filterkörper wie im Beispiel 1 verwendet, von einer Stirnseite her übergossen und überschüssige Suspension mit Luft weggeblasen. Dieser Vorgang wird nach einem Trocknungsschritt über 1,5 Stunden bei 300 °C einmal wiederholt. Zum Abschluß erfolgt eine 5-stündige Trocknung bei 120 °C. Das Filter ist nun mit ca. 37 g $V_2O_5$ von einer Seite her beschichtet.

Anschließend wird von der gleichen Seite her das Filter mit 250 ml einer 1 Gew. %igen KOH-Lösung übergossen. Nach einer 1-stündigen Trocknung bei 300 °C im Trockenofen und einer gleichlangen Temperung im Muffelofen bei 400 °C ist das so beschichtete katalytische Filter einsatzbereit.

## Beispiel 14 : Anwendungstechnische Prüfung

Die in den Beispielen 1-13 hergestellten Filter einschließlich eines unbeschichteten Filters wurden in den Abgasstrom eines Dieselmotors eingebaut und auf ihre Funktion zur Erniedrigung der Ruß-Zündtemperatur überprüft. Die Testparameter waren :

a) Motor

4 Zylinder Einspritzmotor, Diesel
1,6 l Hubraum
40 kW Leistung

b) Rußbeladungsphase des Filters

| | |
|---|---|
| Drehzahl | 2 900 min$^{-1}$ |
| Last | 33 N |
| Sauerstoffgegehalt im Abgas | ca. 14,2 Vol. % |

In der Rußbeladungsphase b) wurde das Filter so lange dem Abgasstrom ausgesetzt, bis eine Druckdifferenz von 150 mbar über das Filter erreicht war. Zur Feststellung der Zündtemperatur wurde die Last bei konstanter Drehzahl (2 900 min$^{-1}$) kontinuierlich erhöht, bis die Differenzdruckerhöhung über das Filter zum Stillstand kam (Figur 2).

Die dabei erreichte Temperatur im Abgasstrom vor dem Filter wird als Zündtemperatur definiert, da bei gleichbleibendem Differenzdruck keine weitere Rußansammlung mehr erfolgt, d. h. es stellt sich ein Gleichgewicht zwischen ausgefiltertem und abgebranntem Ruß ein.

In Tabelle 1 sind diese Zündtemperaturen zusammen mit der dazugehörigen Last und dem entsprechenden Sauerstoffgehalt im Abgas für eine motornahe Anbringung des Filters (ca. 1 m nach Motor) wiedergegeben. In Tabelle 2 sind die entsprechenden Werte für eine motorferne Anbringung (ca. 3-3,5 m nach Motor) enthalten.

Die unterschiedlichen Sauerstoffkonzentrationen im Abgas stellen sich durch die für die Abbrenn- bzw. Zündtemperaturen benötigten Lastwerte ein. Hohe Last ist gleichbedeutend mit fetterem Gemisch und hoher Abgastemperatur und damit auch mit einem geringeren Sauerstoffgehalt im Abgas.

| Beispiel | Zündtemp. °C | Drehzahl min⁻¹ | Last | % O₂ im Abgas |
|---|---|---|---|---|
| * | 505 | 2900 | 77 | 7,8 |
| 1 | 476 | " | 71 | 8,6 |
| 2 | 416 | " | 64 | 9,8 |
| 3 | 300 | " | 55 | - ** |
| 5 | 412 | " | 62 | 10,0 |
| 6 | 413 | " | 63 | 10,0 |
| 7 | 406 | " | 63 | 10,3 |
| 8 | 484 | " | 75 | 8,3 |
| 9 | 425 | " | 65 | 10,0 |
| 13 | 383 | " | 56 | 11,3 |

* = Filterkörper ohne Beschichtung
** = keine exakte Erfassung des O₂-Anteils im Abgas möglich

| Beispiel | Zündtemp. °C | Drehzahl min⁻¹ | Last | % O₂ im Abgas |
|---|---|---|---|---|
| * | 520 | 2900 | 82 | 5,4 |
| 1 | 455 | " | 74 | 7,7 |
| 4 | 431 | " | 70 | 8,1 |
| 8 | 498 | " | 80 | 6,2 |
| 10 | 467 | " | 76 | 7,3 |
| 11 | 513 | " | 82 | 5,3 |
| 12 | 504 | " | 80 | 6,0 |

**Patentansprüche**

1. Verfahren zur Herabsetzung der Zündtemperatur von aus dem Abgas von Dieselmotoren ausgefiltertem Dieselruß, wobei das Abgas über eine katalytisch aktive Substanz aus
Lithiumoxid,
Kupfer (I)-chlorid,
Vanadinpentoxid mit 1-30 Gew.% Alkalimetalloxid,

einem Vanadat, ausgenommen Silbervanadat, vorzugsweise einem Vanadat des Lithiums, Natriums, Kaliums oder Cers oder

einem Perrhenat, vorzugsweise des Kaliums oder Silbers

oder aus einer Kombination zweier oder mehrerer dieser Substanzen geleitet wird.

2. Verfahren nach Anspruch 1, dadurch gekennzeichnet, daß die katalytisch aktive Substanz auf einer temperaturbeständigen Trägersubstanz abgeschieden oder mit ihr vermischt ist.

3. Verfahren nach Anspruch 1 oder 2, dadurch gekennzeichnet, daß die katalytisch aktive Substanz oder ihre Kombination mit einem Trägermaterial auf einem als struktureller Verstärker dienenden Filterelement aufgebracht ist.

4. Verfahren nach Anspruch 3, dadurch gekennzeichnet, daß als struktureller Verstärker ein von zahlreichen Strömungskanälen durchzogener monolithischer Keramikkörper verwendet wird, dessen Kanalmündungen in gegenüberliegenden Stirnflächen so mit Verschlußmitteln versehen sind, daß jeweils ein in einer Stirnfläche offener Kanal in der gegenüberliegenden Stirnfläche verschlossen ist.

5. Verfahren nach den Ansprüchen 2-4, dadurch gekennzeichnet, daß neben der aktiven Substanz eine Edelmetallimprägnierung vorliegt.

6. Verfahren nach den Ansprüchen 3-5, dadurch gekennzeichnet, daß die aktive Substanz im Bereich der Filtereingangsseite und die Edelmetall-Imprägnierung daran anschließend im Bereich der Filterausgangsseite aufgebracht ist.

## Claims

1. Process for reducing the ignition temperature of particulates filtered out of the exhaust gas from diesel engines by passing the exhaust gas over a catalytically active substance comprising

lithium oxide,

copper(I) chloride,

vanadium pentoxide with 1-30 % by weight of alkali metal oxide,

a vanadate, but not silver vanadate, preferably of lithium, sodium, potassium or cerium or

a perrhenate, preferably of potassium or silver or a combination of two or more of these substances.

2. Process according to Claim 1, characterized in that the catalytically active substance has been deposited on a temperature resistant carrier substance or mixed therewith.

3. Process according to Claim 1 or 2, characterized in that the catalytically active substance or a combination thereof with a carrier material has been applied to a filter element acting as structural reinforcer.

4. Process according to Claim 3, characterized in that the structural reinforcer used is a monolithic ceramic which is permeated by numerous flow channels and whose channel mouths at opposite end faces have been provided with sealing agents in such a way that each channel open at one end face is sealed at the opposite end face.

5. Process according to Claims 2-4, characterized in that a noble metal impregnation is present as well as the active substance.

6. Process according to Claims 3-5, characterized in that the active substance has been applied in the region of the filter inlet side and the noble metal impregnation adjoiningly thereto in the region of the filter outlet side.

## Revendications

1. Procédé pour abaisser la température d'ignition du noir de fumée séparé par filtration du gaz d'échappement des moteurs Diesel, caractérisé en ce que le gaz d'échappement passe sur une substance catalytiquement activée, composée de :

oxyde de lithium

chlorure de cuivre (I)

pentoxyde vanadique avec 1-30 % en poids d'oxyde de métaux alcalins

un vanadate, à l'exception du vanadate d'argent, de préférence le vanadate de lithium, de sodium, de potassium ou de césium ou,

un perrhénate, de préférence de potassium ou d'argent, ou d'une combinaison de deux ou plusieurs de ces substances.

2. Procédé selon la revendication 1, caractérisé en ce que la substance catalytiquement active est déposée sur un matériau de support résistant à la température et qu'elle y est mélangée.

3. Procédé suivant la revendication 1 ou 2, caractérisé en ce que la substance catalytiquement active, ou sa combinaison avec le matériau de support, est appliquée sur un élément filtrant servant de renforçateur structurel.

4. Procédé suivant la revendication 3, caractérisé en ce qu'un corps céramique monolithique traversé par de nombreux canaux d'écoulement est prévu comme renforçateur structurel, dont les embouchures des canaux sont munies sur leurs surfaces frontales opposées de moyens de fermeture de telle sorte que chacun des canaux ouverts sur une surface frontale soit fermé sur la surface frontale opposée.

5. Procédé selon les revendications 2 à 4, caractérisé en ce que, outre la substance active, une imprégnation d'un métal noble est présente.

6. Procédé selon les revendications 3 à 5, caractérisé en ce que la substance active est disposée dans la zone du côté entrée du filtre et l'imprégnation d'un métal noble, est en se joignant, disposée dans la zone du côté sortie du filtre.

*Fig. 1a*

Abgas

*Fig. 1b*

1

Fig.2